# EUROPÄISCHE PATENTSCHRIFT

(11) **EP 2 809 471 B1**
(45) Veröffentlichungstag und Bekanntmachung des Hinweises auf die Patenterteilung: **29.04.2020**
(21) Anmeldenummer: 12794292.8
(22) Anmeldetag: 27.11.2012
(51) Int. Cl.: B23G 7/02

(54) **WERKZEUG ZUR SPANLOSEN ERZEUGUNG ODER NACHBEARBEITUNG EINES GEWINDES AN EINEM WERKSTÜCK, INSBESONDERE GEWINDEFURCHER ODER GEWINDEFORMER**
TOOL FOR THE CHIPLESS PRODUCTION OR FINISHING OF A THREAD ON A WORKPIECE, IN PARTICULAR COLD-FORMING TAP OR THREAD-FORMING TAP
OUTIL DE PRODUCTION OU D'USINAGE ULTÉRIEUR SANS ENLÈVEMENT DE COPEAUX D'UN FILET SUR UNE PIÈCE, EN PARTICULIER OUTIL DE TARAUDAGE OU DE FORMATION DE FILETAGES

(30) Priorität: 30.01.2012 DE 102012100734
(43) Veröffentlichungstag der Anmeldung: 10.12.2014
(73) Patentinhaber: EMUGE-Werk Richard Glimpel GmbH & Co.KG Fabrik für Präzisionswerkzeuge, 91207 Lauf a.d. Pegnitz (DE)
(72) Erfinder: GLIMPEL, Helmut, 91207 Lauf a. d. Pegnitz (DE)
(74) Vertreter: Schröer, Gernot H.
(86) Internationale Anmeldenummer: PCT/EP2012/073683
(87) Internationale Veröffentlichungsnummer: WO 2013/113422

(56) Entgegenhaltungen:
- DE-A1-102005 051 174
- DE-A1-102006 015 367
- DE-A1-102008 053 772

## Beschreibung

Die Erfindung betrifft ein Werkzeug zur spanlosen Erzeugung oder Nachbearbeitung eines Gewindes an einem Werkstück, insbesondere einen Gewindefurcher oder Gewindeformer.

Bei diesen Werkzeugen erfolgt die Gewindeerzeugung spanlos mittels Umformung des Werkstücks, indem sogenannte Drückstollen, auch als Formkeile oder Zähne bezeichnet, durch Druck eine Kaltverformung des Werkstücks bewirken. Der Vorteil dieser Werkzeuge ist, dass durch die Verformung der Oberfläche und die damit verbundene Verfestigung die Härte des Werkstoffs im Bereich des Gewindeprofils ansteigt und somit ein verschleißfesteres Gewinde als bei spanender Gewindeerzeugung entsteht.

Bekannte Gewindefurcher, insbesondere zur Innengewindeerzeugung, umfassen einen Schaft und einen Arbeitsbereich. Der Schaft ist in der Regel zylindrisch ausgeführt und mit seinem dem Werkstück abgewandten Ende im Spannfutter einer Gewindeerzeugungseinrichtung aufgenommen und gehalten. Der Arbeitsbereich, insbesondere der Formungsbereich, befindet sich auf der dem Schaft gegenüberliegenden Seite des Gewindefurchers.

Der Formungsbereich ist mit einer entlang des Umfangs spiralförmig umlaufenden Formgebungskurve versehen, entlang der als Erhöhungen die Drückstollen ausgebildet sind.

Bei bekannten Gewindefurchern ist der Teilungswinkel zwischen zwei jeweils entlang der Formgebungskurve aufeinanderfolgenden Drückstollen für alle Drückstollen gleich groß. Eine gedachte geradlinige Verbindungslinien zwischen den Spitzen der Drückstollen entlang der Formgebungskurve bilden in einer Projektion auf eine Fläche senkrecht zur Werkzeugachse bis auf radiale Abweichungen im Wesentlichen ein regelmäßiges n-Eck, wobei n Drückstollen pro Umlauf der Formgebungskurve um die Werkzeugachse angeordnet sind. Jeder n-te Drückstollen ist entlang einer Geraden parallel zur Werkzeugachse angeordnet, diese entlang einer Geraden angeordneten Drückstollen bilden einen sogenannten Drücksteg.

Als weiteren Stand der Technik verweisen wir auf DE 10 2008 053772 A1, DE 10 2006 015367 A1 und DE 10 2005 051174 A1.

Der vorliegenden Erfindung liegt die Aufgabe zugrunde, ein neuartiges Werkzeug zur spanlosen Erzeugung eines Gewindes, insbesondere einen neuartigen Gewindefurcher oder Gewindeformer, anzugeben.

Diese Aufgabe wird gelöst durch die Merkmale des Anspruchs 1. Vorteilhafte Ausgestaltungen und Weiterbildungen sind in den abhängigen Ansprüchen angegeben.

Das Werkzeug gemäß der Erfindung umfasst mindestens einen um eine Werkzeugachse drehbaren oder drehenden Formungsbereich zur spanlosen Erzeugung oder Nachbearbeitung des Gewindes, insbesondere eines Innengewindes. Der Formungsbereich weist mehrere radial von der Werkzeugachse weg nach außen ragende oder vorstehende Drückstollen auf zum Erzeugen oder Nachbearbeiten des Gewindes durch Eindrücken der Drückstollen in die Werkstückoberfläche. Die Drückstollen sind entlang einer die Werkzeugachse im Wesentlichen spiralförmig (oder schraubenförmig oder helixförmig) umlaufenden Formgebungskurve aufeinanderfolgend angeordnet. Die Steigung der Formgebungskurve entspricht im Wesentlichen der Steigung des zu erzeugenden oder nachzuarbeitenden Gewindes.

Gemäß der Erfindung ist vorgesehen, dass der Teilungswinkel zwischen einem ersten der Drückstollen und einem auf diesen ersten Drückstollen entlang der Formgebungskurve folgenden zweiten Drückstollen sich vom Teilungswinkel zwischen dem zweiten Drückstollen und einem auf den zweiten Drückstollen entlang der Formgebungskurve folgenden dritten Drückstollen unterscheidet. Der Teilungswinkel ist hierbei definiert in einer Projektion der jeweiligen Drückstollen in eine Ebene senkrecht zur Werkzeugachse. Der Scheitelpunkt des Teilungswinkels zwischen zwei Drückstollen liegt auf der Werkzeugachse und seine beiden Schenkel gehen durch die Spitzen der beiden betrachteten Drückstollen, wobei unter Spitze eines Drückstollens die Stelle des Drückstollens mit dem größten Abstand zur Werkzeugachse verstanden wird.

Die Erfindung ist dadurch gekennzeichnet, dass die Drückstollen derart zufällig entlang der Formgebungskurve verteilt sind, dass keine sich wiederholende Folge von aufeinanderfolgenden Teilungswinkeln existiert, wobei jeder Teilungswinkel zwischen 2° und 178° liegt, insbesondere zwischen 10° und 170°, vorzugsweise zwischen 20° und 120°. Insbesondere weist das Werkzeug keine Drückstege auf. Diese zufällige Verteilung führt zu einer ungleichmäßigen Verteilung der Drückstollen am Umfang, ohne Wiederholung der Anordnung von Umlauf zu Umlauf der Formgebungskurve.

Die Vorteile des erfindungsgemäßen Werkzeugs liegen in einem guten Anformverhalten und in einer hohen Genauigkeit der mit diesem Werkzeug erzeugten Gewinde, da das Werkzeug durch die erfindungsgemäße Anordnung der Drückstollen beim Bearbeiten eines Werkstücks präzise geführt wird.

Gemäß einer Weiterbildung der Erfindung liegt der Betrag der Differenz zwischen den beiden verschiedenen Teilungswinkeln zwischen 2° und 45°, insbesondere zwischen 5° und 15°.

Eine weitere Ausführungsform sieht vor, dass sich mindestens drei aufeinanderfolgende Teilungswinkel zwischen entlang der Formgebungskurve aufeinanderfolgenden Drückstollen unterscheiden, insbesondere um mindestens 2°, vorzugsweise um mindestens 5°.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Dabei zeigen
- FIG 1: eine perspektivische Ansicht eines bekannten Gewindefurchers,
- FIG 2: eine perspektivische Ansicht eines weiteren bekannten Gewindefurchers,
- FIG 3: eine Projektion eines Ausführungsbeispiels eines Werkzeugs in eine Ebene senkrecht zur Werkzeugachse, in Blickrichtung entgegen einer Vorschubrichtung des Werkzeugs, und
- FIG 4 bis FIG 6: Abwicklungen von Teilen der Formungsbereiche verschiedener Ausführungsbeispiele von Werkzeugen, wobei lediglich FIG 6 ein erfindungsgemäßes Werkzeuge betrifft.

Einander entsprechende Teile und Größen sind in den Figuren mit den gleichen Bezugszeichen bezeichnet.

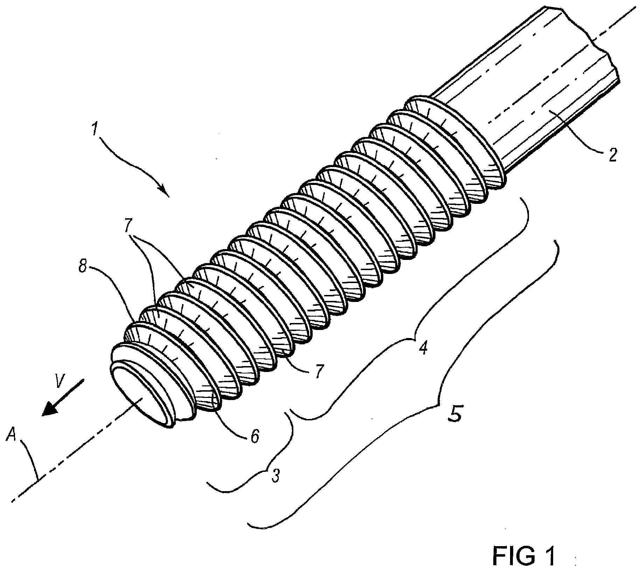

FIG 1 zeigt einen an sich bekannten Gewindefurcher 1, der einen Werkzeugschaft 2 und zwei Arbeitsbereiche, nämlich einen Formgebungsbereich 3 und einen Kalibrierbereich 4 umfasst. Formgebungsbereich 3 und Kalibrierbereich 4 bilden einen Formungsbereich 5 des Gewindefurchers 1. Eine Werkzeugachse A, die gleichzeitig eine Drehachse des Gewindefurchers 1 darstellt, verläuft parallel zur Längserstreckung des Gewindefurchers 1 durch die Mitte des Gewindefurchers 1. Eine Vorschubrichtung V des Gewindefurchers 1 verläuft parallel zur Werkzeugachse A und ist in FIG 1 durch die Pfeilrichtung angegeben. Der Gewindefurcher 1 dient zur spanlosen Innengewindeherstellung.

Der Werkzeugschaft 2 kann beispielsweise zylindrisch ausgeführt sein und trägt in der Regel an der im Spannfutter eingebrachten Seite einen Vierkant (hier nicht dargestellt) zur Furchmomentübertragung. Der Werkzeugschaft 2 ist hier fest mit dem angrenzenden Formungsbereich 5 verbunden, insbesondere sind der Werkzeugschaft 2 und der Formungsbereich 5 einstückig ausgeführt. Der Formungsbereich 5 weist in einer Projektion auf eine Fläche senkrecht zur Werkzeugachse A eine polygonale Form auf, die annähernd die Form eines Dreiecks mit abgerundeten Ecken und gerundeten Verbindungslinien zwischen den Ecken besitzt.

Im Formungsbereich 5 sind an einem Werkzeugkern als Formgebungsgewinde zahlreiche Drückstollen 7 entlang einer Formgebungskurve 6 ausgebildet. Die Formgebungskurve 6 läuft spiralförmig bzw. schraubenförmig, d.h. mit Steigung, um die Werkzeugachse A. Die Drückstollen 7 weisen an ihrem freien äußeren Ende jeweils eine Spitze 8 (auch: Kopf) auf. Die Drückstollen 7 sind entlang der Formgebungskurve 6 und damit aufgrund der Steigung der Formgebungskurve 6 axial entlang der Werkzeugachse A versetzt angeordnet.

Jeder Umlauf, also jede Windung, der Formgebungskurve 6 um die Werkzeugachse A umfasst im dargestellten Fall drei Drückstollen 7. Alle jeweils dritten Drückstollen 7 der entlang der Formgebungskurve unmittelbar aufeinanderfolgenden Drückstollen 7 sind mit ihrer Spitze 8 in einer Ebene angeordnet, die auch die Werkzeugachse A enthält. Statt drei Drückstollen 7 können Gewindefurcher in alternativen Ausführungsformen auch mehrere Drückstollen 7 pro Gewindegang aufweisen, beispielsweise vier oder fünf oder sechs oder sieben oder acht oder neun oder zehn.

Wird nun der Gewindefurcher 1 in Vorschubrichtung V in eine Bohrung eingeführt, so bilden die Drückstollen 7 des Formgebungsbereichs 3 ein Gewinde in der Innenwand der Bohrung aus. Dabei dringen die entlang der Formgebungskurve 6 aufeinanderfolgenden Drückstollen 7 in die Werkstückoberfläche ein, bis ein letzter Drückstollen 7 des Formgebungsbereichs 3 das Gewinde in seiner vollen Tiefe und Breite ausformt. Bei weiterer rotierender Bewegung des Gewindefurchers 1 in Vorschubrichtung V kalibrieren und glätten die nachfolgenden Drückstollen 7 des Kalibrierbereichs 4 das erzeugte Gewinde (die Gewindegänge bzw. Gewinderillen). Die Drückstollen 7 im Kalibrierbereich 4 sind deshalb in ihren Abmessungen und in ihrer Form genau auf das zu erzeugende Gewinde abgestimmt.

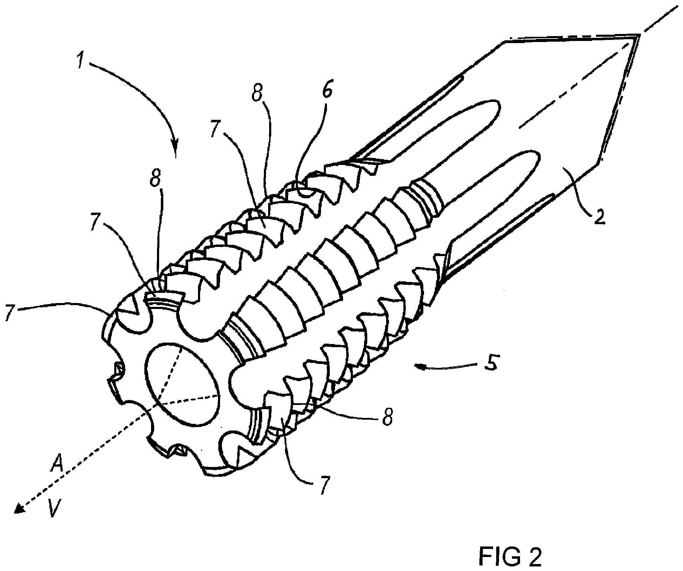

FIG 2 zeigt in einer perspektivischen Darstellung schematisch einen Teil eines weiteren bekannten Ausführungsbeispiels eines Gewindefurchers 1. Die Werkzeugachse A und die Vorschubrichtung V sind dargestellt. Wiederum weist ein Formungsbereich 5 Drückstollen 7 auf, die entlang einer Formgebungskurve 6 angeordnet sind. Die Spitzen 8 der Drückstollen 7 sind jeweils zu erkennen. Pro Umlauf der Formgebungskurve 6 um die Werkzeugachse A sind in diesem Ausführungsbeispiel sieben Drückstollen angeordnet. Gedachte geradlinige Verbindungslinien zwischen den Spitzen 8 der Drückstollen 7 entlang der Formgebungskurve 6 bilden in einer Projektion auf eine Fläche senkrecht zur Werkzeugachse A bis auf radiale Abweichungen insbesondere bei Drückstollen 7 nahe der Werkzeugspitze im Wesentlichen ein regelmäßiges Siebeneck. Die Drückstollen 7 sind so angeordnet, dass jeweils jeder siebte Drückstollen 7 in einer Ebene liegt, die auch die Werkzeugachse A enthält. Mit anderen Worten sind die jeweils siebten Drückstollen 7 bis auf radiale Abweichungen im Wesentlichen entlang einer Linie (Geraden) angeordnet. Bei einem Umlauf um das Werkzeug 1 entlang der Formgebungskurve 6 erfasst man sieben Drückstollen 7.

Bei den in FIG 1 und FIG 2 gezeigten bekannten Gewindefurchern 1 sind die Drückstollen gleichmäßig um den Umfang des Formungsbereichs 5 verteilt angeordnet, das heißt gedachte geradlinige Verbindungslinien zwischen den Spitzen 8 der Drückstollen 7 entlang der Formgebungskurve 6 bilden in einer Projektion auf eine Fläche senkrecht zur Werkzeugachse A bis auf radiale Abweichungen im Wesentlichen ein regelmäßiges n-Eck, wobei n Drückstollen pro Umlauf der Formgebungskurve 6 um die Werkzeugachse A angeordnet sind. Mit anderen Worten: Der Teilungswinkel zwischen jeweils entlang der Formgebungskurve 6 aufeinanderfolgenden Drückstollen ist für alle Drückstollen gleich groß.

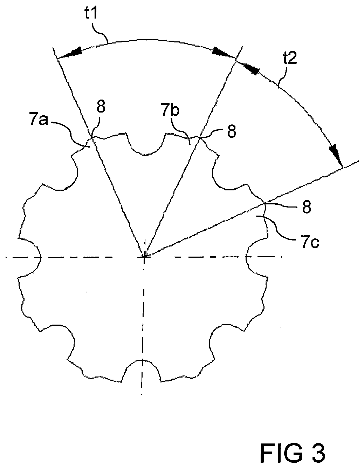

Hierin liegt der zentrale Unterschied zu Werkzeugen 1, wie sie in FIG 3 bis FIG 6 gezeigt sind. Bei diesen Ausführungsbeispielen unterscheidet sich der Teilungswinkel t1 zwischen einem ersten der Drückstollen 7a und einem auf diesen ersten Drückstollen 7a entlang der Formgebungskurve 6 folgenden zweiten Drückstollen 7b vom Teilungswinkel t2 zwischen dem zweiten Drückstollen 7b und einem auf den zweiten Drückstollen 7b entlang der Formgebungskurve 6 folgenden dritten Drückstollen 7c.

FIG 3 verdeutlicht dies in einer Projektionsdarstellung. Gezeigt ist die Projektion eines Ausführungsbeispiels eines Werkzeugs 1 in eine Ebene senkrecht zur Werkzeugachse, in Blickrichtung entgegen einer Vorschubrichtung des Werkzeugs. Zu erkennen sind drei entlang der Formgebungskurve aufeinanderfolgende Drückstollen 7a, 7b, 7c, deren Spitze 8 jeweils als am weitesten vorstehende radiale Erhebung ersichtlich ist. Zwischen diesen Spitzen 8 sind die Teilungswinkel t1 und t2 dargestellt, wobei der Teilungswinkel t1 zwischen den Spitzen 8 des ersten Drückstollens 7a und des zweiten Drückstollens 7b größer ist als der Teilungswinkel t2 zwischen den Spitzen 8 des zweiten Drückstollens 7b und des dritten Drückstollens 7c. Im in FIG 3 gezeigten Beispiel handelt es sich um ein Werkzeug 1 mit acht Drückstollen pro Umlauf der Formgebungskurve 6.

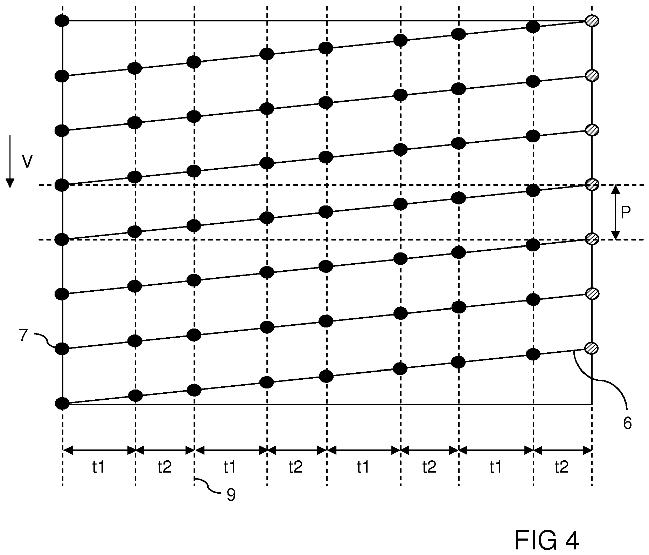

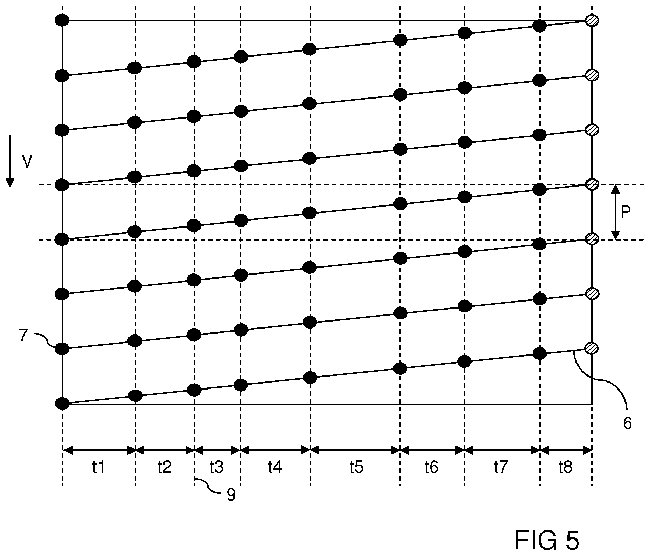

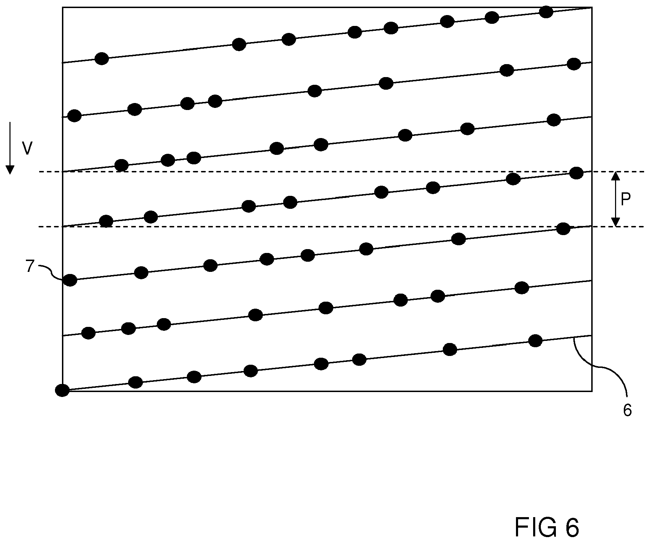

FIG 4 bis FIG 6 verdeutlichen die Anordnung der Drückstollen 7 anhand von Abwicklungsdarstellungen von Teilen der Formungsbereichs verschiedener Ausführungsbeispiele von Werkzeugen, wobei lediglich FIG 6 ein erfindungsgemäßes Werkzeug betrifft. Die Teilungswinkel t1, t2, ... sind schematisch durch Doppelpfeile dargestellt. Zur Verdeutlichung der Orientierung der Abwicklungsdarstellungen ist jeweils die Vorschubrichtung V des Werkzeugs eingetragen. Zu erkennen ist jeweils die Formgebungskurve 6, entlang der die Drückstollen 7 angeordnet sind. Die Gewindesteigung P der Formgebungskurve 6 ist in FIG 4 bis FIG 6 eingetragen. In den Abwicklungsdarstellungen entspricht eine von der linken Seite der Darstellung bis zur rechten Seite der Darstellung gehende Linie einem Umlauf der Formgebungskurve um die Werkzeugachse A. Da in FIG 4 und FIG 5 Drückstollen 7 am linken Rand der dargestellten Abwicklung angeordnet sind, erscheinen diese auch am rechten Rand. Zur Verdeutlichung, dass es sich hierbei jeweils um den bereits am linken Rand dargestellten Drückstollen handelt, sind diese Drückstollen am rechten Rand schraffiert dargestellt. Somit wird deutlich, dass in den in FIG 4 und FIG 5 gezeigten Ausführbeispielen pro Umlauf der Formgebungskurve 6 acht Drückstollen angeordnet sind. Selbstverständlich sind vergleichbare Ausführungsformen mit einer kleineren oder einer größeren Anzahl an Drückstollen möglich.

FIG 4 zeigt eine Anordnung von Drückstollen 7 entlang der Formgebungskurve 6, bei der sich zwei verschiedene Teilungswinkel t1 und t2 zwischen aufeinanderfolgenden Drückstollen 7 entlang der Formgebungskurve 6 einander abwechseln. Die Drückstollen 7 sind so angeordnet, dass jeweils jeder achte Drückstollen 7 in einer Ebene liegt, die auch die Werkzeugachse A enthält. Mit anderen Worten sind die jeweils achten Drückstollen 7 im Wesentlichen entlang einer Geraden 9 angeordnet. Diese Linien bzw. Geraden 9 werden auch als Drückstege bezeichnet.

FIG 5 zeigt eine Anordnung von Drückstollen 7 entlang der Formgebungskurve 6, bei der sich alle Teilungswinkel t1, t2, ..., t8 zwischen aufeinanderfolgenden Drückstollen 7 eines Umlaufs der Formgebungskurve 6 um die Werkzeugachse A voneinander unterscheiden. Die Drückstollen 7 sind jedoch wie im Beispiel nach FIG 4 so angeordnet, dass jeweils jeder achte Drückstollen 7 in einer Ebene liegt, die auch die Werkzeugachse A enthält, das heißt die jeweils achten Drückstollen 7 sind im Wesentlichen entlang einer Geraden 9 und somit als geradlinige Drückstege angeordnet. Somit ergibt sich eine Folge aufeinanderfolgender unterschiedlicher Teilungswinkel t1, t2, ..., t8 zwischen entlang der Formgebungskurve 6 aufeinanderfolgenden Drückstollen 7, die sich fortlaufend entlang der Formgebungskurve 6 wiederholt.

FIG 6 zeigt im Unterschied zu FIG 4 und FIG 5 ein erfindungsgemäßes Ausführungsbeispiel, bei dem die Drückstollen 7 derart zufällig entlang der Formgebungskurve 6 verteilt sind, dass keine sich wiederholende Folge von aufeinanderfolgenden Teilungswinkeln existiert. Die Drückstollen 7 sind - unter Beachtung bestimmter Randbedingungen - zufällig entlang der Formgebungskurve angeordnet, die Teilungswinkel unterscheiden sich dementsprechend, ohne dass eine Systematik erkennbar ist. Eine in FIG 6 erkennbare Randbedingung bei der Anordnung ist jedoch, dass sich eine möglichst gleichmäßige Überdeckung des Umfangs des Formungsbereichs ergeben soll, um eine gleichmäßige Verteilung der beim Formen auftretenden Kräfte zu erreichen und damit einen geradlinigen Vorschub sicherzustellen. Im dargestellten Beispiel sind die Drückstollen derart angeordnet, dass pro Umlauf der Formgebungskurve 6 zumindest in etwa acht plus/minus ein Drückstollen 7 vorgesehen sind. Hieraus ergibt sich auch, dass die Teilungswinkel innerhalb einer vorgegebenen Spanne liegen, beispielsweise zwischen 10° und 170°. Im Unterschied zu den nicht erfindungsgemäßen Beispielen nach FIG 4 und FIG 5 bilden die Drückstollen 7 im erfindungsgemäßen Beispiel nach FIG 6 keine geradlinigen Drückstege parallel zur Werkzeugachse A.

Selbstverständlich sind Werkzeugausbildungen analog zu den Beispielen gemäß FIG 4 bis FIG 6 auch mit einer anderen Zahl an Drückstollen pro Umlauf der Formgebungskurve um die Werkzeugachse möglich, beispielsweise mit drei oder vier oder fünf oder sechs oder sieben oder neun oder zehn Drückstollen pro Umlauf. Ferner kann insbesondere zur Stirnseite des Werkzeugs hin ein radialer Versatz der Drückstollen vorgesehen sein.

### Bezugszeichenliste

- 1: Werkzeug zur Materialbearbeitung, Gewindefurcher
- 2: Werkzeugschaft
- 3: Formgebungsbereich
- 4: Kalibrierbereich
- 5: Formungsbereich
- 6: Formgebungskurve
- 7, 7a, 7b, 7c: Drückstollen
- 8: Spitze des Drückstollens
- 9: Gerade, Drücksteg

- A: Werkzeugachse
- P: Gewindesteigung
- t1, t2, ...: Teilungswinkel zwischen Drückstollen
- V: Vorschubrichtung

## Patentansprüche

1. Werkzeug (1) zur spanlosen Erzeugung oder Nachbearbeitung eines Gewindes in oder an einem Werkstück, insbesondere Gewindefurcher oder Gewindeformer,
umfassend mindestens einen um eine Werkzeugachse (A) drehbaren oder drehenden Formungsbereich (5) zur spanlosen Erzeugung oder Nachbearbeitung des Gewindes, insbesondere eines Innengewindes,
wobei der Formungsbereich (5) mehrere radial von der Werkzeugachse (A) weg nach außen ragende oder vorstehende Drückstollen (7, 7a, 7b, 7c) aufweist zum Erzeugen oder Nachbearbeiten des Gewindes durch Eindrücken der Drückstollen (7, 7a, 7b, 7c) in die Werkstückoberfläche, wobei die Drückstollen (7, 7a, 7b, 7c) entlang einer die Werkzeugachse (A) im Wesentlichen spiralförmig umlaufenden Formgebungskurve (6) aufeinanderfolgend angeordnet sind,
wobei die Steigung der Formgebungskurve (6) im Wesentlichen der Steigung des zu erzeugenden oder nachzuarbeitenden Gewindes entspricht, und
wobei der Teilungswinkel (t1) zwischen einem ersten der Drückstollen (7a) und einem auf diesen ersten Drückstollen (7a) entlang der Formgebungskurve (6) folgenden zweiten Drückstollen (7b) sich vom Teilungswinkel (t2) zwischen dem zweiten Drückstollen (7b) und einem auf den zweiten Drückstollen (7b) entlang der Formgebungskurve (6) folgenden dritten Drückstollen (7c) unterscheidet.
**dadurch gekennzeichnet, dass**
die Drückstollen (7) derart zufällig entlang der Formgebungskurve (6) verteilt sind, dass keine sich wiederholende Folge von aufeinanderfolgenden Teilungswinkeln (t1, t2, ...) existiert, wobei jeder Teilungswinkel (t1, t2, ...) zwischen 2° und 178° liegt.

2. Werkzeug nach Anspruch 1,
**dadurch gekennzeichnet, dass**
der Betrag der Differenz zwischen den beiden verschiedenen Teilungswinkeln (t1, t2) zwischen 2° und 45° liegt, insbesondere zwischen 5° und 15°.

3. Werkzeug nach einem der vorhergehenden Ansprüche,
**dadurch gekennzeichnet, dass**
sich mindestens drei aufeinanderfolgende Teilungswinkel (t1, t2, t3, ...) zwischen entlang der Formgebungskurve (6) aufeinanderfolgenden Drückstollen (7) unterscheiden, insbesondere um mindestens 2°, vorzugsweise um mindestens 5°.

4. Werkzeug nach einem der vorhergehenden Ansprüche,
**dadurch gekennzeichnet, dass**
jeder Teilungswinkel (t1, t2, ...) zwischen 10° und 170° liegt, vorzugsweise zwischen 20° und 120°.

## Claims

1. A tool (1) for chipless production or finishing of a thread in or on a workpiece, in particular a cold-forming tap or a thread-forming tap,
comprising at least one cold-forming area (5) which rotates or can be rotated about a tool axis (A) for chipless production or finishing of a thread, in particular an inside thread,
wherein the cold-forming area (5) has a plurality of pressing lugs (7, 7a, 7b, 7c) that protrude or extend radially outward away from the tool axis (A) for producing or finishing the thread by pressing the pressing lugs (7, 7a, 7b, 7c) into the tool surface, wherein the pressing lugs (7, 7a, 7b, 7c) are arranged in succession along an essentially spiral-shaped forming curve (6) around the tool axis (A),
wherein the pitch of the forming curve (6) corresponds essentially to the pitch of the thread to be produced or finished, and
wherein the separation angle (t1) between a first one of the pressing lugs (7a) and a second pressing curve (7b), which follows the first pressing lug (7a) along the forming curve (6) differs from the separation angle (t2) between the second pressing lug (7b) and a third pressing lug (7c), which follows the second pressing lug (7b) along the forming curve (6), **characterized in that**
the pressing lugs (7) are distributed randomly along the forming curve (6), so that there is no repeating sequence of successive separation angles (t1, t2, ...), such that each separation angle (t1, t2, ...) is between 2° and 178°.

2. The tool according to claim 1,
**characterized in that**
the amount of the difference between the two different separation angles (t1, t2, t3, ...) is between 2° and 45°, in particular between 5° and 15°.

3. The tool according to any one of the preceding claims,
**characterized in that**
at least three successive separation angles (t1, t2, t3, ...) between pressing lugs (7) that follow one another along the forming curve (6) differ by at least 2° in particular, preferably by at least 5°.

4. The tool according to any one of the preceding claims,
**characterized in that**
each separation angle (t1, t2, ...) is between 10° and 170°, preferably between 20° and 120°.

## Revendications

1. Outil (1) de production ou d'usinage ultérieur sans enlèvement de copeaux d'un filet dans ou sur une pièce, en particulier outil de taraudage ou de formation de filetages,
comprenant au moins une partie formage (5) tournant ou pouvant tourner autour d'un axe d'outil (A) pour la production ou l'usinage ultérieur du filetage sans enlèvement de copeaux, en particulier d'un filetage intérieur,
dans lequel la partie formage (5) présente plusieurs languettes de pression (7, 7a, 7b, 7c) dépassant ou faisant saillie radialement vers l'extérieur à partir de l'axe d'outil (A) pour la production ou l'usinage ultérieur du filetage par introduction par pression des languettes de pression (7, 7a, 7b, 7c) dans la surface de la pièce,
dans lequel les languettes de pression (7, 7a, 7b, 7c) sont agencées successivement le long d'une courbe de formage (6) entourant sensiblement en spirale l'axe d'outil (A),
dans lequel le pas de la courbe de formage (6) correspond sensiblement au pas du filetage à produire ou à soumettre à un usinage ultérieur,
et
dans lequel l'angle de pas (t1) entre une première languette de pression (7a) et une deuxième languette de pression (7b) suivant ladite première languette de pression (7a) le long de la courbe de formage (6) est différent de l'angle de pas (t2) entre la deuxième languette de pression (7b) et une troisième languette de pression (7c) suivant ladite deuxième languette de pression (7b) le long de la courbe de formage (6).
**caractérisé en ce que**
les languettes de pression (7) sont réparties de manière aléatoire le long de la courbe de formage (6) de sorte qu'aucune suite se répétant d'angles de pas successifs (t1, t2, ...) n'existe, chaque angle de pas (t1, t2, ...) se situant entre 2° et 178°.

2. Outil selon la revendication 1,
**caractérisé en ce que**
la valeur de la différence entre les deux angles de pas différents (t1, t2) se situe entre 2° et 45°, en particulier entre 5° et 15°.

3. Outil selon l'une des revendications précédentes,
**caractérisé en ce**
**qu'**au moins trois angles de pas successifs (t1, t2, t3, ...) se différencient entre des languettes de pression (7) successives le long de la courbe de formage (6), en particulier à raison d'au moins 2°, de préférence à raison d'au moins 5°.

4. Outil selon l'une des revendications précédentes,
**caractérisé en ce que**
chaque angle de pas (t1, t2, ...) se situe entre 10° et 170°, de préférence entre 20° et 120°.
